# EUROPEAN PATENT APPLICATION

(11) **EP 4 428 175 A1**
(43) Date of publication of application: **11.09.2024**
(21) Application number: 22889973.8
(22) Date of filing: 02.11.2022
(51) Int. Cl.: C08G 65/40, C08K 7/04, C08L 71/08, C08J 5/04, C08J 5/18

(54) **AROMATIC POLYETHER, COMPOSITION, FILM, POWDER, PELLETS, COMPOSITE MATERIAL PRODUCTION METHOD, AND COMPOSITE MATERIAL**

(30) Priority: 02.11.2021 JP 2021179434
(71) Applicant: Idemitsu Kosan Co.,Ltd., Tokyo 100-8321 (JP)
(72) Inventor: SUDO, Ken, Tokyo 100-8321 (JP); SUGA, Koichi, Tokyo 100-8321 (JP); SENGA, Minoru, Tokyo 100-8321 (JP); ITO, Kenta, Tokyo 100-8321 (JP)
(74) Representative: Hoffmann Eitle
(86) International application number: PCT/JP2022/040975
(87) International publication number: WO 2023/080153

(57) **Abstract**

An aromatic polyether having a structural unit represented by the following formula (1) and a structural unit represented by the following formula (2), wherein MFR₄ [g/10 min] measured after preheating the aromatic polyether at 380°C for 4 minutes and MFR₃₀ [g/10 min] measured after preheating the aromatic polyether at 380°C for 30 minutes satisfy the condition of MFR₄/MFR₃₀ ≥ 1.1.

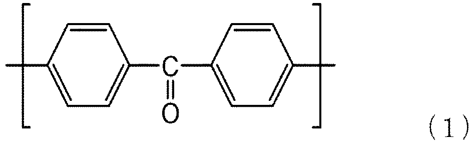

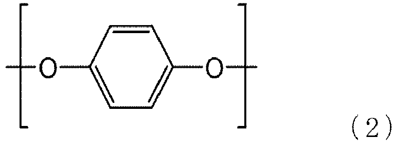

## Description

### Technical Field

The present invention relates to an aromatic polyether, a composition, a film, a powder, a pellet, a method for producing a composite material and a composite material.

Specifically, the present invention relates to an aromatic polyether having excellent mechanical strength, a composition, a film, a powder, a pellet, a method for producing a composite material and a composite material.

### Background Art

A composite material is known in which a resin is reinforced with a continuous fiber such as carbon fiber or glass fiber. In recent years, such a composite material has been used to replace metals, such as is also used in aircraft exteriors.

A thermosetting resin such as an epoxy or phenolic resin is generally used as the resin for such a composite material. However, in a composite material using a thermosetting resin, it is difficult to bond the composite materials together, and it is necessary to form the entire shape of the component at one time. In addition, since the thermosetting resin requires a curing time, there is also a limit to improvement in productivity.

Therefore, attempts have been made to use a thermoplastic resin instead of a thermosetting resin. Examples of a composite material using an aromatic polyether as a thermoplastic resin include Patent Documents 1 to 3.

### Related Art Documents

### Patent Documents

[Patent Document 1] JP H02-247229 A
[Patent Document 2] JP 2015-17343 A
[Patent Document 3] WO 2020/040121 A1

### Summary of the Invention

However, the aromatic polyether of the prior art, including those of Patent Document 1, were found to have further room for improvement in terms of increasing mechanical strength, especially of a composite material containing a continuous fiber and an aromatic polyether.

An object of the present invention is to provide an aromatic polyether having excellent mechanical strength, a film, a powder, a pellet, a method for producing a composite material, and a composite material.

As a result of intensive studies, the present inventors have found that an aromatic polyether having a specific melting property has excellent mechanical strength, and in particular, can increase the mechanical strength of a composite material containing a continuous fiber and an aromatic polyether, and have completed the present invention.

According to the present invention, the following aromatic polyether and so on can be provided.
1. An aromatic polyether comprising a structural unit represented by the following formula (1) and a structural unit represented by the following formula (2),
   wherein MFR₄ [g/10 min] measured after preheating the aromatic polyether at 380°C for 4 minutes and MFR₃₀ [g/10 min] measured after preheating the aromatic polyether at 380°C for 30 minutes satisfy the condition of MFR₄/MFR₃₀ ≥ 1.1. 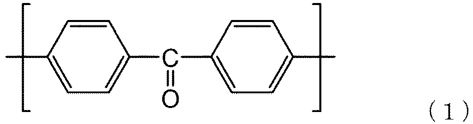 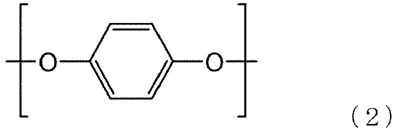
2. The aromatic polyether according to 1, which comprises a structural unit represented by the following formula (3). 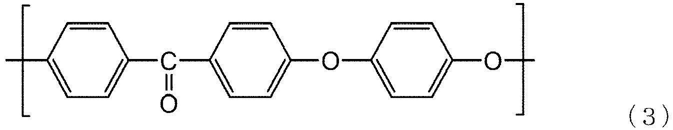
3. The aromatic polyether according to 1 or 2, which satisfies one or both of the following conditions (A) and (B):
   (A) the amount a of fluorine atoms is less than 2 mg/kg, and
   (B) the amount b of chlorine atoms is 2 mg/kg or more.
4. A composition comprising the aromatic polyether according to any one of 1 to 3.
5. A composition comprising an aromatic polyether, wherein the aromatic polyether comprises a structural unit represented by the following formula (1) and a structural unit represented by the following formula (2), and MFR₄ [g/10 min] measured after preheating the composition at 380°C for 4 minutes and MFR₃₀ [g/10 min] measured after preheating the composition at 380°C for 30 minutes satisfy the condition of MFR₄/MFR₃₀ ≥ 1.1. 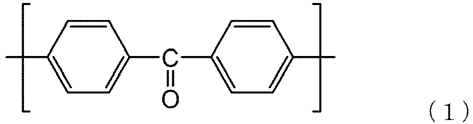 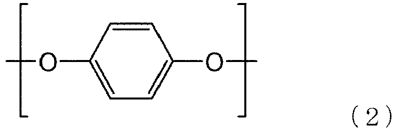
6. The composition according to 5, wherein the aromatic polyether comprises a structural unit represented by the following formula (3). 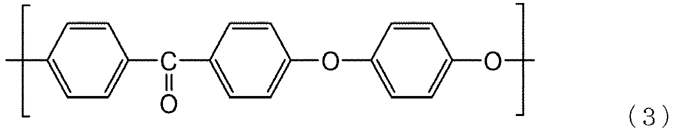
7. The composition according to 5 or 6, which satisfies one or both of the following conditions (A) and (B):
   (A) the amount a of fluorine atoms is less than 2 mg/kg, and
   (B) the amount b of chlorine atoms is 2 mg/kg or more.
8. A film comprising the aromatic polyether according to any one of 1 to 3 or the composition according to any one of 4 to 7.
9. A powder comprising the aromatic polyether according to any one of 1 to 3 or the composition according to any one of 4 to 7.
10. A pellet comprising the aromatic polyether according to any one of 1 to 3 or the composition according to any one of 4 to 7.
11. The aromatic polyether according to any one of 1 to 3, the composition according to any one of 4 to 7, the film according to 8, the powder according to 9 or the pellet according to 10, for use in producing a composite material comprising an aromatic polyether and a continuous fiber.
12. Use of the aromatic polyether according to any one of 1 to 3, the composition according to any one of 4 to 7, the film according to 8, the powder according to 9 or the pellet according to 10 for producing a composite material comprising an aromatic polyether and a continuous fiber.
13. A method for producing a composite material, wherein the composite material is produced using the aromatic polyether according to any one of 1 to 3, the composition according to any one of 4 to 7, the film according to 8, the powder according to 9 or the pellet according to 10, and a continuous fiber.
14. The method for producing the composite material according to 13, which comprises: compositing the aromatic polyether, the composition, the film, the powder or the pellet, and the continuous fiber.
15. The method for producing the composite material according to 13, which comprises: pressing the aromatic polyether, the composition, the film, the powder, or the pellet, and the continuous fiber under heating.
16. A composite material produced using the aromatic polyether according to any one of 1 to 3, the composition according to any one of 4 to 7, the film according to 8, the powder according to 9 or the pellet according to 10, and a continuous fiber.
17. A composite material comprising the aromatic polyether according to any one of 1 to 3 or the composition according to any one of 4 to 7, and a continuous fiber.

According to the present invention, it is possible to provide an aromatic polyether having excellent mechanical strength, a composition, a film, a powder, a pellet, a method for producing a composite material, and a composite material.

### Mode for Carrying out the Invention

Hereinafter, the aromatic polyether, the composition, the film, the powder, the pellet, the method for producing the composite material, and the composite material of the present invention will be described in detail.

In this specification, the expression "x to y" represents the numerical range of "x or more and y or less". An upper limit value and a lower limit value described for the numerical range may be arbitrarily combined.

### 1. Aromatic polyether

The aromatic polyether according to an aspect of the present invention is an aromatic polyether having a structural unit represented by the following formula (1) and a structural unit represented by the following formula (2), wherein

MFR₄ [g/10 min] measured after preheating the aromatic polyether at 380°C for 4 minutes and MFR₃₀ [g/10 min] measured after preheating the PEEK at 380°C for 30 minutes satisfy the condition of MFR₄/MFR₃₀ ≥ 1.1.

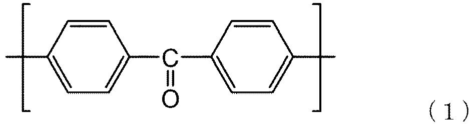

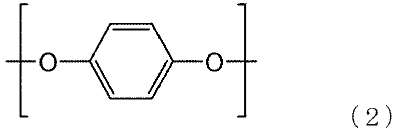

The aromatic polyether according to this aspect is excellent in mechanical strength, and in particular, can impart excellent mechanical strength to a composite material containing the aromatic polyether and a continuous fiber (hereinafter, also referred to as "aromatic polyether/continuous fiber composite material").

The reason why such an effect is exerted is not necessarily clear, but the following can be presumed.

That is, a typical aromatic polyether has MFR₄/MFR₃₀ of 1.0. This means that the melt flowability of the aromatic polyether does not substantially change after preheating at 380°C. In contrast, the aromatic polyether of this aspect satisfies the condition of MFR₄/MFR₃₀ ≥ 1.1. This means that the melt flowability of the aromatic polyether is reduced after preheating at 380°C. The aromatic polyether exhibiting such reduced melt flowability exhibit excellent mechanical strength due to thickening by heating. The cause of such a reduction in melt flowability may be the formation of a cross-linked structure or the like.

For example, in producing an aromatic polyether/continuous fiber composite material, a method is used in which a heat-melted aromatic polyether is impregnated into gaps between continuous fibers in an aggregate of continuous fibers. This heating thickens the aromatic polyether and can impart excellent mechanical strength to the aromatic polyether/continuous fiber composite material.

MFR₄ and MFR₃₀ of the aromatic polyether are not particularly limited as long as the condition of MFR₄/MFR₃₀ ≥ 1.1 is satisfied.

In one embodiment, MFR₄/MFR₃₀ is 10.0 or less, 8.0 or less, 6.0 or less, 4.0 or less, or 3.0 or less.

In one embodiment, the MFR₄ of the aromatic polyether is 0.0001 to 1500.0 g/10 min, 0.0005 to 500.0 g/10 min, 0.001 to 100.0 g/10 min, 0.01 to 100.0 g/10 min, 3.5 to 50.0 g/10 min, 5 to 50.0 g/10 min, or 5.0 to 15.0 g/10 min to the extent that the condition of MFR₄/MFR₃₀ ≥ 1.1 is satisfied.

In one embodiment, the MFR₃₀ of the aromatic polyether is 0.0001 to 1500.0 g/10 min, 0.0005 to 500.0 g/10 min, 0.001 to 100.0 g/10 min, 0.01 to 100.0 g/10 min, or 0.1 to 12.0 g/10 min to the extent that the condition of MFR₄/MFR₃₀ ≥ 1.1 is satisfied.

The MFR₄ and MFR₃₀ are measured by the method described in Examples.

In this specification, "the aromatic polyether satisfies the condition of MFR₄/MFR₃₀ ≥ 1.1" means a case where the aromatic polyether satisfies the condition of MFR₄/MFR₃₀ ≥ 1.1 alone (in the state of completely isolated and purified) or a case where the aromatic polyether satisfies the condition of MFR₄/MFR₃₀ ≥ 1.1 together with other coexisting components. When other coexisting components are present, it can also be said that the aromatic polyether constitutes the composition together with the other coexisting components, and the composition containing the aromatic polyether satisfies the condition of MFR₄/MFR₃₀ ≥ 1.1.

In one embodiment, the aromatic polyether can satisfy the condition of MFR₄/MFR₃₀ ≥ 1.1 by adjusting the amount of coexisting base in the aromatic polyether. When a base is coexisting in the aromatic polyether, a base may be blended to the aromatic polyether as an additive, or potassium carbonate as a base used in the synthesis of the aromatic polyether may be intentionally left in the aromatic polyether.

In one embodiment, 0.02 to 0.18 parts by mass of potassium carbonate may be added to 100 parts by mass of the aromatic polyether (the "100 parts by mass" is the amount of the aromatic polyether alone and does not include the amount of other components such as potassium carbonate). The amount of potassium carbonate to be added is more preferably 0.02 to 0.09 parts by mass, 0.02 to 0.06 parts by mass, or 0.02 to 0.04 parts by mass. Accordingly, it is possible to suitably satisfy the condition of MFR₄/MFR₃₀ ≥ 1.1.

In one embodiment, pH at the time of washing the aromatic polyether is washed is adjusted to be higher than 7.0 and 10 or lower, more preferably 8.0 to 10, and still more preferably 8.0 to 9.5. Here, "at the time of washing the aromatic polyether" is, for example, at the time of washing after the synthesis of the aromatic polyether, and when the washing of the aromatic polyether is performed a plurality of times, at the time of the final washing. Accordingly, it is possible to suitably satisfy the condition of MFR₄/MFR₃₀ ≥ 1.1. In other words, an aromatic polyether having pH of higher than 7.0 and 10 or lower when the aromatic polyether is pulverized to impregnate with water can suitably satisfy the condition of MFR₄/MFR₃₀ ≥ 1.1.

The method for obtaining an aromatic polyether satisfying the condition of MFR₄/MFR₃₀ ≥ 1.1 is not limited to a method using a coexisting component such as a base, and for example, a method for introducing a functional group capable of crosslinking the aromatic polyether to each other (for example, crosslinkable at a temperature of 380°C) to the aromatic polyether can also be used. The functional group introduced into the aromatic polyether can be selected such that the aromatic polyether satisfies the condition of MFR₄/MFR₃₀ ≥ 1.1.

In one embodiment, the aromatic polyether satisfies one or both of the following conditions (A) and (B):
(A) the amount a of fluorine atoms is less than 2 mg/kg, and
(B) the amount b of chlorine atoms is 2 mg/kg or more.

The "amount a of fluorine atoms" is a proportion of the mass [mg] of fluorine atoms to the mass [kg] of the sum of the aromatic polyether (not including other coexisting components) and the other coexisting components.

The "amount b of chlorine atoms" is a proportion of the mass [mg] of chlorine atoms to the mass [kg] of the sum of the aromatic polyether (not including other coexisting components) and the other coexisting components.

In one embodiment, the amount a of fluorine atoms in the aromatic polyether is less than 2 mg/kg. Thus, the effect of the present invention is satisfactorily exhibited. The lower limit thereof is not particularly limited, and may be, for example, 0 mg/kg.

Here, the amount a of fluorine atoms in the aromatic polyether is the sum of the amount a1 of fluorine atoms contained in the molecular structure of the aromatic polyether and the amount a2 of fluorine atoms contained as a component (free component) not contained in the molecular structure of the aromatic polyether.

In one embodiment, the amount a of fluorine atoms in the aromatic polyether can be set to less than 2 mg/kg by refraining from the use of a fluorine atom-containing raw material (e.g., 4,4'-difluorobenzophenone) at the time of the synthesis of the aromatic polyether, or by reducing the usage amount of the fluorine atom-containing raw material at the time of the synthesis of the aromatic polyether.

In one embodiment, the free component in the amount a2 of fluorine atoms is one or both of potassium fluoride and 4,4'-difluorobenzophenone.

In one embodiment, the amount b of chlorine atoms in the aromatic polyether is 2 mg/kg or more, 10 mg/kg or more, 100 mg/kg or more, 500 mg/kg or more, 700 mg/kg or more, 1000 mg/kg or more, 2000 mg/kg or more, 33000 mg/kg or more, or 4000 mg/kg or more. Thus, the effect of the present invention is satisfactorily exhibited. The upper limit thereof is not particularly limited, and may be, for example, 10,000 mg/kg or less, 9,000 mg/kg or less, 8,000 mg/kg or less, 7,000 mg/kg or less, or 6,000 mg/kg or less.

The amount b of chlorine atoms in the aromatic polyether is, for example, 2 to 10000 mg/kg, preferably 700 to 9000 mg/kg, and more preferably 1000 to 8000 mg/kg.

Here, the amount b of chlorine atom is the sum of the amount b1 of the chlorine atoms contained in the molecular structure of the aromatic polyether and the amount b2 of the chlorine atoms contained as a component (free component) not contained in the molecular structure of the aromatic polyether.

In one embodiment, the raw material in the aromatic polyether synthesis contains 4,4'-dichlorobenzophenone to set the amount b of chlorine atoms in the aromatic polyether to be 2 mg/kg or more, and the amount b of chlorine atoms in the aromatic polyether can be increased in the range of 2 mg/kg or more by using 4,4'-dichlorobenzophenone and hydroquinone as the raw material in the aromatic polyether synthesis and increasing the proportion of the usage amount of 4,4'-dichlorobenzophenone to the usage amount of hydroquinone.

In one embodiment, the amount b1 of chlorine atoms is 0 mg/kg or more, 100 mg/kg or more, 200 mg/kg or more, or 400 mg/kg or more. The upper limit thereof is not particularly limited, and may be, for example, 10,000 mg/kg or less, 9,000 mg/kg or less, 8,000 mg/kg or less, or 7,000 mg/kg or less.

In one embodiment, the amount b2 of the chlorine atoms is 0 mg/kg or more, 2 mg/kg or more, 5 mg/kg or more, or 10 mg/kg or more. The upper limit thereof is not particularly limited, and may be, for example, 500 mg/kg or less, 400 mg/kg or less, or 300 mg/kg or less.

In one embodiment, the free component in the amount b2 of the chlorine atoms is one or both of potassium chloride and 4,4'-dichlorobenzophenone.

The amount of a chlorine atom incorporated as potassium chloride, which is a free component, into the aromatic polyether is determined by the following method.

### <Method for measuring amount of chlorine atom incorporated as potassium chloride, which is free component, into aromatic polyether>

A solid sample (aromatic polyether) is pulverized with a blender, and is washed with acetone and water in the stated order, followed by drying with an explosion-proof dryer at 180°C. When a reaction mixture (product) immediately after a reaction for the production of the aromatic polyether is used as a sample, the product is cooled and solidified after the completion of the reaction to be used as the solid sample. The blender to be used is not particularly limited, and for example, 7010HS manufactured by Waring may be used.

About 1 g of the dried sample is weighed, and 100 ml (l: liter) of ultrapure water is added to the sample. The mixture is stirred at a liquid temperature of 50°C for 20 minutes, and is left standing to cool. After that, the mixture is filtered to be separated into a solid content and an aqueous solution. The aqueous solution is analyzed by ion chromatography, and the amount of a chloride ion in the aqueous solution is determined on the basis of a calibration curve produced from a reference having a known concentration. Conditions for an ion chromatograph are as described below.

### <Ion chromatograph>

Analyzer: Metrohm 940 IC Vario
Column: A guard column (Metrosep A Supp 5 Guard) and a separation column (Metrosep A Supp 4) are used while being linked to each other (both the columns are manufactured by Metrohm AG).
Eluent: Na₂CO₃ (1.8 mmol/l) + NaHCO (1.7 mmol/l)
Flow rate: 1.0 ml/min
Column temperature: 30°C
Measurement mode: A suppressor system
Detector: An electric conductivity detector

The chlorine atom incorporated as 4,4'-dichlorobenzophenone, which is a free component, into the aromatic polyether is determined by the following method.

### <Method for measuring amount of chlorine atom incorporated as 4,4'-dichlorobenzophenone, which is free component, into aromatic polyether>

A solid sample (aromatic polyether) is pulverized with a blender, and is washed with acetone and water in the stated order, followed by drying with an explosion-proof dryer at 180°C. When a reaction mixture (product) immediately after a reaction for the production of the aromatic polyether is used as a sample, the product is cooled and solidified after the completion of the reaction to be used as the solid sample. The blender to be used is not particularly limited, and for example, 7010HS manufactured by Waring may be used.

About 1 g of the dried sample is weighed in a recovery flask, and 10 ml of acetone and a boiling stone are added thereto, followed by heating to reflux in a water bath for 5 hours. The mixture is left standing to cool to room temperature, and then its solid content is removed by filtration. The resultant acetone solution is evaporated to dryness with an evaporator, and then 10 ml of acetone is added with a volumetric pipette to redissolve the residue. This is measured by gas chromatography to calculate the amount of 4,4'-dichlorobenzophenone in the sample (mg/kg). The amount (mg/kg) of chlorine atoms incorporated as 4,4'-dichlorobenzophenone, which is the free component, into the aromatic polyether is calculated by the following equation.

The amount of chlorine atoms (mg/kg) incorporated in the aromatic polyether as 4,4 '-dichlorobenzophenone, which is the free component, is the amount of 4,4'-dichlorobenzophenone in the sample (mg/kg) /251.11(molecular weight of 4,4'-dichlorobenzophenone) × 35.45 (atomic weight of chlorine) × 2

The quantitative value of 4,4'-dichlorobenzophenone is determined on the basis of a calibration curve produced from a reference having a known concentration. Measurement conditions are described below.

### <Gas chromatograph>

Analyzer: Agilent Technologies 7890B
GC column: Agilent Technologies DB-5MS (length: 30 m, inner diameter: 0.25 mm, thickness: 0.25 µm)
Inlet temperature: 250°C
Oven temperature: 100°C (1 min) → 30°C/min → 250°C (10 min)
Flow rate: 1 ml/min
Injection amount: 1 µl
Split ratio: 40:1
Detector: FID
Detector temperature: 250°C

In the aromatic polyether according to one embodiment, the structural unit represented by the formula (1) is disposed at one or more ends of a molecular chain by bonding a terminal structure to the structural unit. In this case, a terminal structure bonded to the structural unit may be a chlorine atom (CI).

In the aromatic polyether according to one embodiment, the structural unit represented by the formula (2) is disposed at one or more ends of a molecular chain by bonding a terminal structure to the structural unit. In this case, a terminal structure bonded to the structural unit may be, for example, a hydrogen atom (H) (when the terminal structure is the hydrogen atom (H), the atom forms a hydroxy group with an oxygen atom (O) in the structural unit).

The terminal structure of the aromatic polyether may be, for example, a structure obtained by substituting the above-mentioned chlorine atom (CI) or hydroxy group with a hydrogen atom (H) or the like. The terminal structure is not limited to those examples, and may be any structure.

In one embodiment, the aromatic polyether has a structural unit represented by the following formula (3). The aromatic polyether having the structural unit represented by the formula (3) is also referred to as polyether ether ketone (abbreviation "PEEK").

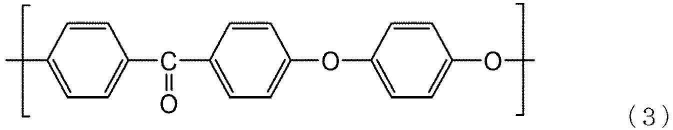

In one embodiment, the aromatic polyether does not have other structural units than the structural unit represented by the formula (3). Provided that the PEEK may have a terminal structure at a terminal of its molecular chain as described above.

In one embodiment,
the proportion (% by mass) of the structural unit represented by the formula (3) based on (i) the moiety formed by removing the terminal structure from the entire PEEK, or
based on (ii) the total amount of all the structural units constituting PEEK is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, in PEEK, molar ratio ([1A]:[2A]) of the structural unit represented by the formula (1) to the structural unit represented by the formula (2) is 47.5:52.5 to 52.5:47.5, 48.0:52.0 to 52.0:48.0, 48.5:51.5 to 51.5:48.5, 49.0:51.0 to 51.0:49.0, or 49.5:50.5 to 50.5:49.5.

In PEEK, the number of moles of the structural unit represented by the formula (1) may be larger than, smaller than, or identical to the number of moles of the structural unit represented by the formula (2).

When the total ratio of the structural units represented by the formula (1) and the formula (2) in all the monomers for forming the PEEK is 100% by mass, the above-mentioned molar ratio is typically 1:1.

Hereinafter, methods for producing PEEK will be described in detail.

In one embodiment, PEEK can be produced, for example, by reacting 4,4'-dihalogenobenzophenone with hydroquinone.

4,4'-dihalogenobenzophenone and hydroquinone are monomers for polymerizing the aromatic polyether.

Through a step of reacting 4,4'-dihalogenobenzophenone and hydroquinone, the aromatic polyether can be obtained as a copolymer of these compounds (monomer units).

4,4'-dihalogenobenzophenone and hydroquinone can be easily synthesized, and commercial products are also available.

The 4,4'-dihalogenobenzophenone is not particularly limited, and the two halogen atoms may be the same or different from each other. The two halogen atoms may independently be a fluorine atom, a chlorine atom, a bromine atom, or an iodine atom. Specific examples of the 4,4'-dihalogenobenzophenone include 4,4'-difluorobenzophenone, 4,4'-dichlorobenzophenone, and the like, and among them, 4,4'-dichlorobenzophenone is preferable.

In the following description, the "reaction mixture" is a reaction system from the start of the reaction of 4,4'-dihalogenobenzophenone and hydroquinone to the completion of the reaction, preferably in the form of a solution containing, in addition to these monomers, a solvent to be described later. The composition of the reaction mixture may change as the reaction proceeds. Usually, as the reaction proceeds, the concentration of the reactants (4,4'-dihalogenobenzophenone and hydroquinone) in the reaction mixture decreases and the concentration of the product (aromatic polyether) in the reaction mixture increases.

In addition, the "highest temperature" of the reaction mixture is the highest temperature (highest temperature reached) reached by the reaction mixture in a process from the start of the reaction between 4,4'-dihalogenobenzophenone and hydroquinone to the completion of the reaction.

The highest temperature of the reaction mixture is not particularly limited, and is, for example, 260 to 360°C, preferably higher than 290°C and 360°C or lower, more preferably 295 to 360°C, and still more preferably 295 to 320°C.

In one embodiment, the method for producing the aromatic polyether according to this aspect contains holding the reaction mixture at 180 to 220°C for 0.5 to 2 times, preferably 0.6 to 1.8 hours, more preferably 0.7 to 1.5 hours (hereinafter also referred to as "temperature holding (i)"). As a result, the reaction can be accelerated while the volatilization of the raw materials is suppressed, and hence an aromatic polyether having a higher molecular weight can be obtained.

In one embodiment, the method for producing the aromatic polyether according to this aspect contains holding the reaction mixture at 230 to 270°C for 0.5 to 2 times, preferably 0.6 to 1.8 hours, more preferably 0.7 to 1.5 hours (hereinafter also referred to as "temperature holding (ii)"). As a result, the reaction can be accelerated while the volatilization of the raw materials is suppressed, and hence an aromatic polyether having a higher molecular weight can be obtained.

In one embodiment, the method for producing the aromatic polyether according to this aspect contains holding the reaction mixture at 280 to 360°C for 1 to 8 hours, preferably 2 hours or more, 3 hours or more, 4 hours or more, 5 hours or more, 8 hours or less, 6 hours or less, for example, 3 hours or more and 6 hours or less (the upper limit and the lower limit can be arbitrarily combined) (hereinafter also referred to as "temperature holding (iii)"). As a result, an aromatic polyether having a desired molecular weight can be obtained.

In one embodiment, the method for producing the aromatic polyether according to this aspect may contain two or three selected from the group consisting of the above-mentioned temperature holdings (i) to (iii). The two or three temperature holdings are preferably performed in order of increasing temperature. The method may contain increasing the temperature of the reaction mixture between the two or three temperature holdings.

A rate of temperature increasing when the temperature of the reaction mixture is increased is not particularly limited, and may be, for example, 0.1 to 15°C/min, 0.1 to 10°C/min, 0.1 to 8°C/min, or 0.1 to 5°C/min. As a result, the reaction can be accelerated while the volatilization of the raw materials is suppressed, and hence an aromatic polyether having a higher molecular weight can be obtained.

In one embodiment, in the method for producing the aromatic polyether according to this aspect, a time period from a time point at which the temperature of the reaction mixture reaches 150°C to a time point at which the temperature reaches the highest temperature is 2.0 hours to 10 hours.

In one embodiment, the reaction mixture contains a solvent. The reaction mixture containing the solvent may be in the form of a solution. The solution may contain 4,4'-dichlorobenzophenone and hydroquinone dissolved in the solvent.

The solvent is not particularly limited, and for example, a neutral polar solvent may be used. Examples of the neutral polar solvent include N,N-dimethylformamide, N,N-diethylformamide, N,N-dimethylacetamide, N,N-diethylacetamide, N,N-dipropylacetamide, N,N-dimethylbenzamide, N-methyl-2-pyrrolidone, N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone, N-methyl-3-ethylpiperidone, dimethyl sulfoxide, diethyl sulfoxide, 1-methyl-1-oxosulfolane, 1-ethyl-1-oxosulfolane, 1-phenyl-1-oxosulfolane, N,N'-dimethylimidazolidinone and diphenyl sulfone. Of these, diphenyl sulfone is particularly preferred.

In one embodiment, the reaction mixture contains an aromatic sulfone such as diphenyl sulfone and the like, and the amount of a solvent having a boiling point of 270 to 330°C in the mixture is 0 parts by mass or more and less than 1 part by mass with respect to 100 parts by mass of the aromatic sulfone. Thus, it becomes easier to control a reaction temperature.

The reaction mixture may contain one or two or more of solvents. In particular, the reaction mixture preferably contains only one kind of solvent (single solvent) as a solvent. Thus, a process for the production of the PEEK can be simplified.

In one embodiment, the reaction mixture contains potassium carbonate. Thus, the reaction is accelerated.

In one embodiment, the reaction mixture contains an alkali metal salt, such as: any alkali metal carbonate other than the potassium carbonate; or an alkali metal hydrogen carbonate. Such alkali metal salt may be used in combination with the potassium carbonate. For example, the potassium carbonate and sodium carbonate may be used in combination.

Examples of the alkali metal carbonate include lithium carbonate, rubidium carbonate, and cesium carbonate.

Examples of the alkali metal hydrogen carbonate that may be used in combination with the potassium carbonate include lithium hydrogen carbonate, sodium hydrogen carbonate, potassium hydrogen carbonate, rubidium hydrogen carbonate, and cesium hydrogen carbonate.

Those alkali metal salts may be used alone, or two or more kinds thereof may be used in combination.

The total concentration of the alkali metal salts (including the potassium carbonate and the above-mentioned other alkali metal salt) in the reaction mixture is not particularly limited.

In one embodiment, the total blending amount of the alkali metal salts in the reaction mixture is 100 parts by mole or more with respect to 100 parts by mole of hydroquinone to be blended into the reaction mixture, and is 180 parts by mole or less, 160 parts by mole or less, 140 parts by mole or less, or 120 parts by mole or less with respect thereto. When the total blending amount of the alkali metal salts is 100 parts by mole or more, a reaction time can be shortened. When the total blending amount of the alkali metal salts is 180 parts by mole or less, the production of a gel component can be suppressed. In addition, the total blending amount of the alkali metal salts in the reaction mixture is, for example, 100 to 180 parts by mole, preferably 100 to 140 parts by mole, more preferably 100 to 120 parts by mole with respect to 100 parts by mole of hydroquinone to be blended into the reaction mixture.

In one embodiment, the potassium carbonate is blended as an alkali metal salt in the above-mentioned blending amount.

In one embodiment, the reaction mixture is free of any of sodium fluoride, potassium fluoride, rubidium fluoride, or cesium fluoride. In this aspect, even when none of those compounds is incorporated, a high-molecular weight aromatic polyether can be obtained. In addition, by not containing these compounds, the remaining of these compounds in the aromatic polyether to be obtained can be avoided, and hence purification cost can be reduced. As a result, an aromatic polyether capable of exhibiting excellent mechanical strength by blending an inorganic compound can be produced at low cost.

A molar ratio of 4,4'-dihalogenobenzophenone (DHBP) and hydroquinone (HQ) ([DHBP]:[HQ]) to be reacted is not particularly limited.

The molar ratio ([DHBP]:[HQ]) may be appropriately adjusted for the purpose of, for example, controlling the molecular weight of the aromatic polyether to be obtained.

In one embodiment, molar ratio ([DHBP]:[HQ]) is 47.5:52.5 to 52.5:47.5, 48.0:52.0 to 52.0:48.0, 48.5:51.5 to 51.5:48.5, 49.0:51.0 to 51.0:49.0, or 49.5:50.5 to 50.5:49.5.

The number of moles of 4,4'-dihalogenobenzophenone (DHBP) may be larger than, smaller than, or indentical to the number of moles of hydroquinone (HQ).

In one embodiment, the total concentration (on a blending amount basis) of 4,4'-dihalogenobenzophenone and hydroquinone in the reaction mixture is not particularly limited, and may be for example, 1.0 mol/l or more, 1.2 mol/l or more, 1.3 mol/l or more, 1.4 mol/l or more, or 1.5 mol/l or more, and 6.0 mol/l or less, 5.0 mol/l or less, or 4.0 mol/l or less. In addition, the total concentration (on a blending amount basis) of 4,4'-dihalogenobenzophenone and hydroquinone in the reaction mixture is, for example, 1.0 to 6.0 mol/l, preferably 1.3 to 5.0 mol/l, and more preferably 1.5 to 4.0 mol/l.

In one embodiment, no monomer other than 4,4'-dihalogenobenzophenone and hydroquinone is used as a monomer to be subjected to the above-mentioned reaction.

In one embodiment, any monomer other than 4,4'-dihalogenobenzophenone and hydroquinone is used in combination in the above-mentioned reaction to the extent that the effect of the present invention is not impaired.

In one embodiment, the proportion (% by mass) of the total of 4,4'-dihalogenobenzophenone and hydroquinone, based on the total monomer subjected to the reaction, is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, 70% by mass or more, 80% by mass or more, 90% by mass or more, 95% by mass or more, 99% by mass or more, 99.5% by mass or more, 99.9% by mass or more, or substantially 100% by mass of the reaction mixture at the time of the start of the reaction is composed of

4,4'-dihalogenobenzophenone, hydroquinone, an alkali metal salt, and the solvent;

4,4'-dihalogenobenzophenone, hydroquinone, one or more of alkali metal salts selected from the group consisting of potassium carbonate and sodium carbonate, and diphenyl sulfone; or

4,4'-dihalogenobenzophenone, hydroquinone, potassium carbonate, and diphenyl sulfone.

In the case of "substantially 100% by mass" thereof, inevitable impurities may be contained.

The reaction between 4,4'-dihalogenobenzophenone and hydroquinone can be performed under an inert gas atmosphere. The inert gas is not particularly limited, and examples thereof include nitrogen and an argon gas.

In one embodiment, the aromatic polyether has a structural unit represented by the following formula (4). The aromatic polyether having the structural unit represented by the formula (4) is also referred to as polyether ether ether ketone (abbreviation "PEEEK"). 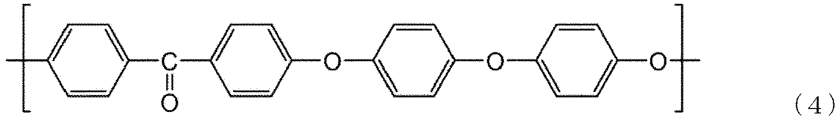 The structural unit represented by the formula (3) and the structural unit represented by the formula (4) are different from each other, and in the aromatic polyether, the partial structure corresponding to the structural unit represented by the formula (4) is regarded as the structural unit represented by the formula (4), and is not regarded as the structural unit represented by the formula (3).

In one embodiment, the aromatic polyether does not have other structural units than the structural unit represented by the formula (4). Provided that the PEEK may have a terminal structure at a terminal of its molecular chain as described above.

In one embodiment, the method for producing the aromatic polyether having a structural unit represented by the formula (4) is the same as the method for producing PEEK except that 4,4'-dihydroxydiphenyl ether is used instead of hydroquinone, and the explanation given for the method for producing the PEEK is incorporated.

In one embodiment, the aromatic polyether has a structural unit represented by the formula (3) and a structural unit represented by the formula (4). An aromatic polyether having a structural unit represented by the formula (3) and a structural unit represented by the formula (4) is also referred to as a polyether ether ketone/polyether ether ether ketone copolymer (abbreviated as "PEEK/PEEEK copolymer").

The proportion [mol %] of the number of moles of the structural unit represented by the formula (4) based on the sum of the number of moles of the structural unit represented by the formula (3) and the number of moles of the structural unit represented by the formula (4) contained in PEEK/PEEEK copolymer is not particularly limited, and is, for example, more than 0% and less than 100%, preferably 0.1 to 99.9 mol%, more preferably 0.1 to 50.0 mol%, more preferably 0.1 to 10.0 mol%, and more preferably 0.1 to 5.0 mol%.

In one embodiment, the aromatic polyether does not have structural units other than the structural unit represented by the formula (3) and the structural unit represented by the formula (4). Provided that the PEEK may have a terminal structure at a terminal of its molecular chain as described above.

In one embodiment, the method for producing the aromatic polyether having a structural unit represented by the formula (3) and a structural unit represented by the formula (4) is the same as the method for producing PEEK except that a part of hydroquinone is replaced with 4,4'-dihydroxydiphenyl ether (hydroquinone and 4,4'-dihydroxydiphenyl ether are used in combination), and the explanation given for the method for producing the PEEK is incorporated.

In one embodiment, the aromatic polyether does not contain other structural units than the structural units represented by the formula (1) and the formula (2). Provided that the PEEK may have a terminal structure at a terminal of its molecular chain as described above.

In one embodiment, the aromatic polyether has other structural units other than the structural units represented by the formula (1) and the formula (2) as long as the effect of the present invention is not impaired.

In one embodiment, the total proportion (% by mass) of the structural units represented by the formula (1) and the formula (2) contained in all monomers based on the total monomer to be subjected to the reaction is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

### 2. Composition

The composition according to first aspect of the present invention contains an aromatic polyether according to an aspect of the present invention.

According to the composition of first aspect, excellent mechanical strength can be imparted to an aromatic polyether/continuous fiber composite material in particular.

The composition according to second aspect of the present invention is a composition containing an aromatic polyether, wherein the aromatic polyether has a structural unit represented by the following formula (1) and a structural unit represented by the following formula (2), and MFR₄ [g/10 min] measured after preheating the composition at 380°C for 4 minutes and MFR₃₀ [g/10 min] measured after preheating the composition at 380°C for 30 minutes satisfy the condition of MFR₄/MFR₃₀ ≥ 1.1.

The composition according to second aspect is also excellent in mechanical strength, and in particular can impart excellent mechanical strength to an aromatic polyether/continuous fiber composite material.

With respect to the aromatic polyether contained in the composition according to second aspect, the explanation given for the aromatic polyether according to an aspect of the present invention is incorporated. However, in the aromatic polyether contained in the composition according to second aspect, MFR₄ [g/10 min] measured after preheating the aromatic polyether at 380°C for 4 minutes and MFR₃₀ [g/10 min] measured after preheating the aromatic polyether at 380°C for 30 minutes may or may not satisfy the condition of MFR₄/MFR₃₀ ≥ 1.1. That is, in the composition according to second aspect, it is sufficient that MFR₄ [g/10 min] measured after preheating the aromatic polyether at 380°C for 4 minutes and MFR₃₀ [g/10 min] measured after preheating the aromatic polyether at 380°C for 30 minutes may satisfy the condition of MFR₄/MFR₃₀ ≥ 1.1.

For the melt viscosity, MFR₄ and MFR₃₀, of the composition, the explanation given for MFR₄ and MFR₃₀ of the aromatic polyether is incorporated including the explanation of their preferred range. The method for measuring MFR₄ and MFR₃₀ of the composition is the same as the method for measuring MFR₄ and MFR₃₀ of the aromatic polyether, except that the composition is used instead of the aromatic polyether as a sample.

In one embodiment of second aspect, the composition satisfies one or both of the following conditions (A) and (B):
(A) the amount a of fluorine atoms is less than 2 mg/kg, and
(B) the amount b of chlorine atoms is 2 mg/kg or more.

The "the amount a of fluorine atoms" is a proportion of the mass [mg] of fluorine atoms to the mass [kg] of the sum of the aromatic polyether (not including other coexisting components) and the other coexisting components. Here, the total mass [kg] of the aromatic polyether (not including the other coexisting component) and the other coexisting component corresponds to the entire mass [kg] of the composition.

The "amount b of chlorine atoms" is a proportion of the mass [mg] of chlorine atoms to the mass [kg] of the sum of the aromatic polyether (not including other coexisting components) and the other coexisting components. Again, the total mass [kg] of the aromatic polyether (not including the other coexisting component) and the other coexisting component corresponds to the entire mass [kg] of the composition.

The method for measuring the amount a of fluorine atoms and the amount b of chlorine atoms in the composition is the same as the method for measuring the amount a of fluorine atoms and the amount b of chlorine atoms in the aromatic polyether, except that the composition is used instead of the aromatic polyether as a sample.

In the following explanation, the composition according to first aspect of the present invention and the composition according to second aspect of the present invention may be collectively referred to as "the composition according to an aspect of the present invention".

Components other than the aromatic polyether contained in the composition according to an aspect of the present invention are not particularly limited.

The composition according to an aspect of the present invention is suitably used, for example, for producing a composite material containing an aromatic polyether and a continuous fiber.

### 3. Film

The film according to an aspect of the present invention contains an aromatic polyether according to an aspect of the present invention or a composition according to an aspect of the present invention.

The film according to an aspect of the present invention is suitably used, for example, for producing a composite material containing an aromatic polyether and a continuous fiber.

### 4. Powder

The powder according to an aspect of the present invention contains an aromatic polyether according to an aspect of the present invention or a composition according to an aspect of the present invention.

The powder according to an aspect of the present invention is suitably used, for example, for producing a composite material containing an aromatic polyether and a continuous fiber.

### 5. Pellet

The pellet according to an aspect of the present invention contains an aromatic polyether according to an aspect of the present invention or a composition according to an aspect of the present invention.

The pellet according to an aspect of the present invention is suitably used, for example, for producing a composite material containing an aromatic polyether and a continuous fiber.

In one embodiment, the composition, film, powder, or pellet according to an aspect of the present invention contains an aromatic polyether and other components.

Other components are not particularly limited and examples thereof include potassium carbonate, other resin that are not aromatic polyether, and the like. Examples of the other resin include fluorine resins such as polytetrafluoroethylene. Other components may be used alone, or two or more kinds thereof may be used in combination.

In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the composition, film, powder, or pellet according to an aspect of the invention is
an aromatic polyether, or
an aromatic polyether, and one or more selected from the other components described above.

In the case of "substantially 100% by mass" thereof, inevitable impurities may be contained.

The film, powder, and pellet according to an aspect of the present invention described above can be formed by a method known in the art using the respective components as materials.

### 6. Composite material

The composite material according to first aspect of the present invention is produced using the aromatic polyether according to an aspect of the present invention, the composition according to an aspect of the present invention, the film according to an aspect of the present invention, the powder according to an aspect of the present invention, or the pellet according to an aspect of the present invention, and a continuous fiber.

The composite material according to first aspect exhibits excellent mechanical strength.

The aromatic polyether contained in the composite material according to first aspect may be the aromatic polyether according to an aspect of the present invention, and may not be the aromatic polyether according to an aspect of the present invention. That is, in the aromatic polyether contained in the composite material according to first aspect, MFR₄ [g/10 min] measured after preheating the aromatic polyether at 380°C for 4 minutes and MFR₃₀ [g/10 min] measured after preheating the aromatic polyether at 380°C for 30 minutes may or may not satisfy the condition of MFR₄/MFR₃₀ ≥ 1.1. Preferably, the condition of MFR₄/MFR₃₀ ≥ 1.1 is satisfied.

The composite material according to second aspect of the present invention contains an aromatic polyether according to an aspect of the present invention or a composition according to an aspect of the present invention and a continuous fiber.

The composite material according to second aspect also exhibits excellent mechanical strength.

In the following explanation, the composite material according to first aspect of the present invention and the composite material according to second aspect of the present invention may be collectively referred to as "composite material according to an aspect of the present invention".

A composite material according to an aspect of the present invention will be described in more detail below.

As used herein, the term "continuous fiber" means a fiber that constitutes a waven fabric or a fiber that constitutes a unidirectionally aligned unidirectional fiber.

In one embodiment, the continuous fiber is contained in the composite material in the form of a fabric or a unidirectional fiber.

A waven fabric and a unidirectional fiber are not particularly limited as long as the continuous fiber is contained. In one embodiment, the waven fabric and the unidirectional fiber are composed of the continuous fiber arranged in a planar.

The continuous fiber included in the composite material is preferably one or more members selected from the group consisting of glass fibers and carbon fibers.

The shape of the continuous fiber is not particularly limited, and may have one or more shapes selected from the group consisting of a roving and a waven fabric composed of a roving.

In addition, in a case where the member containing the continuous fiber has a form of a woven fabric or a unidirectional material, a bundle (fiber bundle) in which the continuous fibers are bundled in one direction can be used. As the member containing the continuous fiber, a product of a bundle of 3000 (3K), 6000 (6K), 12000 (12K), 24000 (24K), 60000 (60K) or the like of single fibers supplied from fiber manufacturers may be used as the fiber bundle, or a bundle further bundled of the above bundles may be used. The fiber bundle may be any of a non-twisted yarn, a twisted yarn, and a untwisted yarn. The fiber bundle may be contained in a state of being opened in a formed body, or may be contained as a fiber bundle without being opened. When the member containing the continuous fiber is a woven fabric or a unidirectional material, the formed body can be obtained by immersing the member in the resin.

The type of the carbon fiber is not particularly limited, and various carbon fibers such as a PAN-based fiber made of polyacrylonitrile, a pitch-based fiber made of coal tar pitch in petroleum or coal, and a thermosetting resin, for example, phenol-based fiber made of phenol resin can be used.

The carbon fiber may be one obtained by a vapor deposition method or may be a recycled carbon fiber (RCF). Carbon fiber is not particularly limited as described above, and at least one carbon fiber selected from the group consisting of PAN-based carbon fiber, pitch-based carbon fiber, heat-curing carbon fiber, phenol-based carbon fiber, vapor-grown carbon fiber, and recycled carbon fiber (RCF) is preferable.

With respect to the average fiber diameter of carbon fibers, single fibers having an average fiber diameter of preferably 3 to 15 µm, with more preferably 5 to 7 µm can be used. The average fiber diameter of carbon fibers is determined by an arithmetic average of the values measured in accordance with JIS R 7607:2000.

The carbon fibers may have a sizing agent attached to a surface thereof. When the carbon fibers to which the sizing agent is attached is used, the type of the sizing agent can be appropriately selected depending upon the type of the carbon fibers, and is not particularly limited. Various commercial products of carbon fibers such as those processed with an epoxy-based sizing agent, a urethane-based sizing agent, or a polyamide-based sizing agent, or those without sizing agent are on sale, and in the invention, the inorganic fiber can be used regardless of the type and presence of a sizing agent. In addition, a silane coupling agent such as an aminosilane, an isocyanate silane, or an acrylsilane may be used in combination as the sizing agent.

The type of the glass fibers is not particularly limited, and for example, glass fibers of various compositions such as E glass, low dielectric glass, silica glass, and the like can be selected and used depending on the purpose and application.

With respect to the average fiber diameter of the glass fibers, single fibers having an average fiber diameter of preferably 5 to 20 µm, with more preferably 7 to 17 µm can be used. The average fiber diameter of glass fibers is determined by an arithmetic average of the values measured in accordance with JIS R 7607:2000.

The glass fibers may have a sizing agent attached to a surface thereof. When the glass fibers to which the sizing agent is attached is used, the type of the sizing agent can be appropriately selected depending upon the type of the glass fibers, and is not particularly limited. Various commercial products of glass fibers such as those processed with an epoxy-based sizing agent, a urethane-based sizing agent, or a vinyl acetate-based sizing agent, or those without sizing agent are on sale, and in the invention, the inorganic fiber can be used regardless of the type and presence of a sizing agent. In addition, a silane coupling agent such as an aminosilane, an isocyanate silane, or an acrylsilane may be used in combination as the sizing agent.

In one embodiment, the average fiber length of the continuous fiber (e.g., carbon fibers or glass fibers) is 25 mm or longer, 50 mm or longer, 100 mm or longer, and 100 km or shorter, 10 km or shorter, 1 km or 100 m or shorter. The average fiber length of the continuous fiber is calculated by arithmetic average.

In one embodiment, the composite material contains a continuous fiber and an aromatic polyether impregnated into the interstices between the continuous fibers. Such a composite material may contain, for example, a woven fabric or unidirectional fiber composed of the continuous fiber and an aromatic polyether impregnated into the interstices between the continuous fibers.

In one embodiment, the composite material contains a continuous fiber and an aromatic polyether as a matrix. The composite material may be a so-called fiber-reinforced thermoplastic (FRTP). For example, a unidirectional fiber-reinforced plastic is obtained by using a unidirectional fiber as the continuous fiber.

The composite material may be a single composite material or may be a stacked body formed by stacking two or more composite materials. When the composite material is the stacked body, the aromatic polyether may also contribute to binding between the composite materials.

The composite material may contain any other component in addition to the aromatic polyether and the continuous fiber. Examples of the other components include those explained for the film, powder, and pellet according to an aspect of the present invention.

In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the composite material is composed of
an aromatic polyether and a continuous fiber, or
an aromatic polyether, a continuous fiber, and one or more selected from the other components described above.
In the case of "substantially 100% by mass" thereof, inevitable impurities may be contained.

A method for producing the above-mentioned composite material is not particularly limited.

In one embodiment, the method for producing a composite material includes: contacting to integrate a continuous fiber with an aromatic polyether according to an aspect of the present invention.

In one embodiment, a solution obtained by dissolving the aromatic polyether according to an aspect of the present invention in a suitable solvent, a mixture obtained by mixing the aromatic polyether according to an aspect of the present invention in a suitable vehicle, or a molten product of the aromatic polyether according to an aspect of the present invention can be contacted with a continuous fiber to integrate.

In one embodiment, the method for producing a composite material includes: producing a composite material with continuous fibers bundled by using a sizing agent containing an aromatic polyether.

In one embodiment, the method for producing a composite material includes: compounding the aromatic polyether according to an aspect of the present invention, the composition according to an aspect of the present invention, the film according to an aspect of the present invention, the powder according to an aspect of the present invention, or the pellet according to an aspect of the present invention, and a continuous fiber.

In one embodiment, the method for producing a composite material includes: pressing under heating the aromatic polyether according to an aspect of the present invention, the composition according to an aspect of the present invention, the film according to an aspect of the present invention, the powder according to an aspect of the present invention, or the pellet according to an aspect of the present invention, and a continuous fiber.

Here, the term "pressing under heating" refers to pressing in a state where the aromatic polyether, the composition, the film, the powder, or the pellet is heated so as to melt, and is hereinafter also referred to as "melt-pressing".

In one embodiment, a method for producing a composite material includes: contacting the film according to an aspect of the present invention with a fabric or unidirectional fiber composed of the continuous fiber, followed by melt-pressing.

In one embodiment, a method for producing a composite material includes: contacting the powder according to an aspect of the present invention with a fabric or unidirectional fiber composed of the continuous fiber, followed by melt-pressing.

In one embodiment, a method for producing a composite material includes: melting the pellet according to an aspect of the present invention, contacting the molten product with a fabric or unidirectional fiber composed of the continuous fiber, and then melt-pressing.

As described above, in the explanation of the method for producing a composite material, two or more layers of the aromatic polyether according to an aspect of the present invention and a woven fabric or unidirectional fiber may be alternately arranged to produce a composite material in the form of the stacked body.

In one embodiment, the composite material is planar (a sheet) over the entire surface.

In one embodiment, a three-dimensional shape is imparted to the composite material. When the shape of the composite material is "three-dimensional", for example, the composite material may be a sheet having a curved portion (a bent portion).

A method for producing the sheet having imparted thereto the three-dimensional shape is not particularly limited.

In one embodiment, a method for producing a three-dimensionally shaped sheet includes: immersing a three-dimensionally shaped fabric or unidirectional fiber in an aromatic polyether.

In one embodiment, a method for producing a sheet with the three-dimensional shape includes: immersing a cloth in an aromatic polyether to obtain a sheet (e.g., a planar sheet), and then forming the sheet to have the three-dimensional shape. The forming may be performed by, for example, applying a pressure to the sheet under heating.

The use of the aromatic polyether, film, powder, pellet, and composite material according to an aspect of the present invention is not particularly limited, and can be widely used in various applications. The aromatic polyether, film, powder, pellet, and composite material according to an aspect of the present invention are suitable as aerospace members, sliding members such as gears and bearings, filaments for 3D printers, and the like.

### Examples

Examples of the present invention are described below, and the present invention is not limited by these Examples.

### 1. Test on the condition of MFR₄/MFR₃₀ ≥ 1.1

### (Example 1)

The reactor was assembled by attaching a stirrer blade, a stirrer, a thermocouple, a nitrogen-containing tube, a cooling tube, and a receiver to a 2 L of four-necked separable flask.

485.14 g (2.22 mol) of diphenyl sulfone (manufactured by Sino-High (China) Co., Ltd.) was charged into the reactor, and the reactor was replaced with a nitrogen atmosphere, and diphenylsulfone was melted by heating with a mantle heater.

Next, 144.23 g (0.574 mol) of 4,4'-dichlorobenzophenone (manufactured by Sino-High (China) Co., Ltd.) and 61.70 g (0.560 mol) of hydroquinone (manufactured by FUJIFILM Wako Pure Chemical Corporation, special grade) were charged into the reactor and melted.

Then, when the temperature of the melted mixture reached 150°C, 89.06 g (0.644 mol) of potassium carbonate (manufactured by JUNSEI CHEMICAL CO.,LTD., special grade) was charged into the reactor, and the temperature was raised to 200°C at a heating rate of 1°C/min.

The reactor was then held at 200°C for 1 hour, then heated to 250°C over 70 minutes and held for 1 hour, and further heated to 300°C over 110 minutes and held for 5 hours.

The reactor was then opened and the reaction solution was removed to a bat, allowed to cool, and solidified.

The solidified material was then washed so that potassium carbonate remained in a PEEK.

Specifically, first, the solidified material was pulverized using a blender (7010HS manufactured by Waring), and the mixture was repeatedly washed with acetone and filtered.

Then, the solidified material after filtration was dispersed in ion-exchanged water, washed at a liquid temperature of 80°C, and filtered.

Then, the solidified material after the filtration was repeatedly washed with ion-exchanged water and filtered until pH of the filtrate reached the values shown in Table 1. Here, in the "washing with ion-exchanged water", 800 ml of ion-exchanged water was added to the solidified material, and the mixture was stirred and washed at 60°C for 20 minutes.

Then, the solidified material after filtration was dried in a hot air dryer at 180°C for 5 hours to obtain a PEEK.

### (Example 2)

A PEEK was obtained in the same manner as in Example 1 except that the usage amounts of 4,4'-dichlorobenzophenone, hydroquinone, potassium carbonate, and diphenyl sulfone were changed as follows.
- 4,4'-dichlorobenzophenone: 289.01 g (1.151 mol)
- Hydroquinone: 123.40 g (1.121 mol)
- Potassium carbonate: 178.12 g (1.289 mol)
- Diphenyl sulfone: 970.28 g (4.45 mol)

### (Example 3)

A commercially available PEEK (450G, manufactured by Victrex plc) was frozen and pulverized.

Then, an aqueous solution containing potassium carbonate at a concentration of 10% by mass was added to the resulting powder so that 0.09 parts by mass of potassium carbonate was added to 100 parts by mass of PEEK, and mixed well.

The mixture was then dried in a hot air dryer at 180°C for 5 hours to obtain a PEEK.

### (Example 4)

A PEEK was obtained in the same manner as in Example 3, except that a commercially available PEEK (151G, manufactured by Victrex plc) was used in place of a commercially available PEEK (450G, manufactured by Victrex plc).

### (Example 5)

41.203 g (0.164 mol) of 4,4'-dichlorobenzophenone, 17.804 g (0.162 mol) of hydroquinone, 25.707 g (0.186 mol) of potassium carbonate (manufactured by FUJIFILM Wako Pure Chemical Corporation, fine powder), and 140.0 g of diphenyl sulfone were loaded into a 300 ml of four-necked flask having a stirring machine, a temperature gauge, a nitrogen-introducing tube, a cooling tube, and a water recovery vessel connected thereto, and a nitrogen gas was flowed therein.

After the temperature of the mixture had been increased to 150°C, the temperature was increased to 200°C over 30 minutes, and was held at the value for 60 minutes. Next, the temperature was increased to 250°C over 30 minutes, and was held at the value for 60 minutes. Further, the temperature was increased to 300°C over 30 minutes, and was held at the value for two hours.

After the completion of the reaction, the product was pulverized with a blender (7010HS manufactured by Waring), and was washed with acetone and water in the stated order, followed by drying with a dryer at 180°C. Thus, a powdery PEEK was obtained.

40 g of the resulting PEEK and 400 mL of N-methyl-2-pyrrolidone (NMP) were charged into a separable flask and stirred at 180°C for an hour. Then, the mixture was cooled below 100°C, and a solid content was obtained by filtration.

1000 ml of a 10% by mass aqueous solution of oxalic acid was added to the obtained solid content, and the mixture was stirred at 80°C for an hour. The solid content was then separated by filtration. This solid content was washed with 1000 ml of hot water at 80°C and filtered three times. The solid content was then dried at 180°C for 5 hours to obtain a powder. The total K (potassium) concentration of the obtained powder was measured and found to be less than 1 ppm, which is the lower limit of quantification.

An aqueous solution containing potassium carbonate at a concentration of 10% by mass was added to the solid content reduced in total K (potassium) concentration as described above so that 0.09 parts by mass of potassium carbonate was added to 100 parts by mass of PEEK, and mixed well. The total K (potassium) concentration of PEEK after the aqueous solution was added was 500 ppm.

The mixture was then dried in a hot air dryer at 180°C for 5 hours to obtain a PEEK.

### (Comparative Example 1)

A commercially available PEEK (450G, manufactured by Victrex plc) was used as a PEEK of Comparative Example 1. The total K (K) concentration of the PEEK of Comparative Example 1 was less than 1 ppm, which is the lower limit of quantification.

### Combustion ion chromatography

The amount a of fluorine atoms and the amount b of chlorine atoms in the PEEK were measured by combustion ion chromatography.

Specifically, the sample was introduced into a combustion furnace, and was combusted in a combustion gas containing oxygen, followed by the collection of a generated gas in an absorbing liquid. After that, the absorbing liquid was subjected to separation and quantification with an ion chromatograph. A quantitative value was determined on the basis of a calibration curve produced from a reference having a known concentration. Measurement conditions are described below.

### <Sample combustion>

Combustion equipment: AQF-2100H incinerator manufactured by Mitsubishi Chemical Analytech Co., Ltd.
Preset temperature: 800°C for the first stage, and 1100°C for the second stage
Argon flow rate: 400 ml/min
Oxygen flow rate: 200 ml/min
Absorbing liquid: A hydrogen peroxide solution

### <Ion chromatograph>

Analyzer: Integrion manufactured by Thermo Fisher Scientific, Inc.
Column: A guard column (Dionex lonPacAG12A) and a separation column (Dionex lonPacAS12A) are used while being linked to each other (both the columns are manufactured by Nippon Dionex K.K.).
Eluent: Na₂CO₃ (2.7 mmol/l) + NaHCO (0.3 mmol/l)
Flow rate: 1.5 ml/min
Column temperature: 30°C
Measurement mode: A suppressor system
Detector: An electric conductivity detector

Measurement results are described below. The detection limit of each of a fluorine atom and a chlorine atom in the above-mentioned measurement method is 2 mg/kg. When the amounts of those atoms are less than the detection limit, the amounts are each represented as "< 2 mg/kg".
- Example 1: a < 2 mg/kg, b = 3200 mg/kg
- Example 2: a < 2 mg/kg, b = 2800 mg/kg
- Example 3: a = 1100 mg/kg, b < 2 mg/kg
- Example 4: a = 1800 mg/kg, b < 2 mg/kg
- Example 5: a < 2 mg/kg, b = 2100 mg/kg
- Comparative Example 1: a = 1100 mg/kg, b < 2 mg/kg

### Measurement of MFR (melt flow rate)

For each of PEEK of Examples 1 to 5 and Comparative Example 1, MFR was measured according to JIS K 7210-1:2014 (ISO 1133-1:2011) using a Melt Indexer (L-220) manufactured by TATEYAMA KAGAKU HIGH-TECHNOLOGIES CO., LTD.

### [Measurement conditions]

- Measurement temperature (resin temperature): 380°C
- Measurement load: 2.16 kg
- Cylinder inner diameter: 9.550 mm
- Die inner diameter: 2.095 mm
- Die length: 8.000 mm
- Piston head length: 6.35 mm
- Piston head diameter: 9.474 mm
- Piston weight: 110.0 g (The above-mentioned measurement load contains the piston weight.)
- Operation:
   The sample was dried at 150°C for two hours or more in advance. The sample was charged into the cylinder, then the piston was inserted, and the sample was preheated in the cylinder for a predetermined time. A load was then applied and the piston guide removed to extrude the molten sample from the die. The sample was cut out when the piston moved by a distance in a predetermined range and a predetermined time (t [s]) passes after the start of the movement, and the mass of the sample was measured (m [g]). MFR was obtained from the following equation. MFR [g/10 min] = 600/t×m
MFR measured when the preheating time was 4 minutes was defined as MFR₄ [g/10 min], and MFR measured when the preheating time was 30 minutes was defined as MFR₃₀ [g/10 min], and the ratio of these values (MFR₄/MFR₃₀) was calculated.

The results are shown in Table 1.

**Table 1**

| | pH at washing | Amount of potassium carbonate based on 100 parts by mass of PEEK [parts by mass] | MFR₄ [g/10min] | MFR₃₀ [g/10min] | MFR₄/MFR₃₀ |
|---|---|---|---|---|---|
| Example 1 | 8.8 | 0 | 5.3 | 2.8 | 1.9 |
| Example 2 | 8.1 | 0 | 12.2 | 10.8 | 1.1 |
| Example 3 | - | 0.09 | 0.32 | 0.11 | 2.9 |
| Example 4 | - | 0.09 | 6.7 | 2.6 | 2.6 |
| Example 5 | - | 0.09 | 2.0 | 0.3 | 6.8 |
| Comparative Example 1 | - | 0 | 3.2 | 3.2 | 1.0 |

### Measurement of mechanical strength (production of aromatic polyether/continuous fiber composite material)

The mechanical strength of each of PEEK of Example 1 and Comparative Example 1 was measured by the following methods.

PEEK was first melted and retained at 400°C for 2 minutes using a flat mold for press forming, held under 10 MPa pressure for 1 minute, and cooled at 20°C for 1 minute to obtain a film having a thickness of 200 µm and a film having a thickness of 100 µm. In order to adjust the thickness of the film, a polyimide film or an aluminum plate was appropriately used as a spacer. The resulting films were cut into 11 cm × 11 cm pieces and used in the following steps.

As the continuous fiber, a woven fabric made of carbon fiber (manufactured by Mitsubishi Chemical Corporation: PYROFIL woven fabric, TR3110M, basis weight 200 g/m²) was prepared. This waven fabric was cut into 11 cm square (longitudinal: 11 cm, lateral: 11 cm). The length of the continuous fiber (carbon fiber) contained in this waven fabric is 11 cm or longer.

Seven films obtained and six waven fabrics were alternately stacked so that the waven fabrics were located between the films. At this time, a film having a thickness of 200 µm was disposed between the waven fabrics, and a film having a thickness of 100 µm was disposed in the outermost layer. The stacked body was sandwiched with a polyimide film having a thickness of 100 µm, placed in a press mold having a convex mold and a concave mold which were previously heated to 420°C, and pressed (melt-pressed) stepwise at a press pressure of 10 MPa for 5 minutes and 100 MPa for 25 minutes under conditions of 420°C, and then returned to atmospheric pressure and cooled to 30°C to obtain an aromatic polyether/continuous fiber composite material. When any of PEEK of Examples 1 to 5 and Comparative Example 1 was used, the thickness of the aromatic polyether/continuous fiber composite material was 1.7 mm, and the volume amount (Vf) of the continuous fiber (carbon fiber) was 40%.

The aromatic polyether/continuous fiber composite materials were cut into 1 cm width using a diamond cutter and dried at 150°C for 12 hours to produce specimens. Using this specimen, flexural strength [MPa] and flexural modulus [GPa] were measured according to ISO 178:2010 at 23°C under the conditions of radial of the indenter: 5 mm, distance between fulcrums: 6 cm, and test speed: 3 mm/min.

The results are shown in Table 2.

**Table 2**

| | Flexural strength [MPa] | Flexural modulus [GPa] |
|---|---|---|
| Example 1 | 481 | 39 |
| Comparative Example 1 | 384 | 33 |

From Table 2, it can be seen that when the aromatic polyether satisfies the condition of MFR₄/MFR₃₀ ≥ 1.1, excellent mechanical strength is exhibited.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. An aromatic polyether comprising a structural unit represented by the following formula (1) and a structural unit represented by the following formula (2),
wherein MFR₄ [g/10 min] measured after preheating the aromatic polyether at 380°C for 4 minutes and MFR₃₀ [g/10 min] measured after preheating the aromatic polyether at 380°C for 30 minutes satisfy the condition of MFR₄/MFR₃₀ ≥ 1.1.

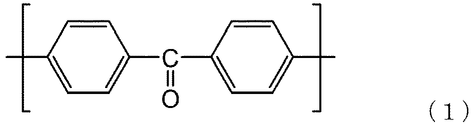

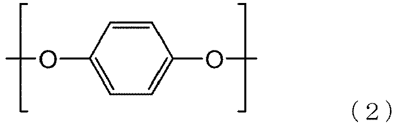

2. The aromatic polyether according to claim 1, which comprises a structural unit represented by the following formula (3).

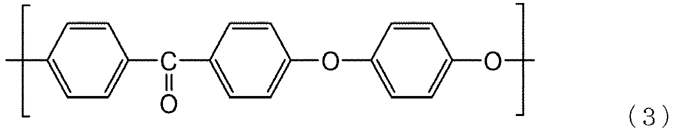

3. The aromatic polyether according to claim 1 or 2, which satisfies one or both of the following conditions (A) and (B):
(A) the amount a of fluorine atoms is less than 2 mg/kg, and
(B) the amount b of chlorine atoms is 2 mg/kg or more.

4. A composition comprising the aromatic polyether according to any one of claims 1 to 3.

5. A composition comprising an aromatic polyether,
wherein the aromatic polyether comprises a structural unit represented by the following formula (1) and a structural unit represented by the following formula (2), and
MFR₄ [g/10 min] measured after preheating the composition at 380°C for 4 minutes and MFR₃₀ [g/10 min] measured after preheating the composition at 380°C for 30 minutes satisfy the condition of MFR₄/MFR₃₀ ≥ 1.1.

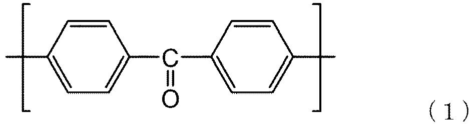

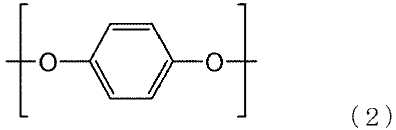

6. The composition according to claim 5, wherein the aromatic polyether comprises a structural unit represented by the following formula (3).

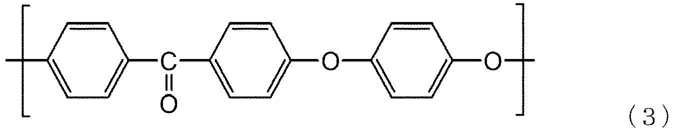

7. The composition according to claim 5 or 6, which satisfies one or both of the following conditions (A) and (B):
(A) the amount a of fluorine atoms is less than 2 mg/kg, and
(B) the amount b of chlorine atoms is 2 mg/kg or more.

8. A film comprising the aromatic polyether according to any one of claims 1 to 3 or the composition according to any one of claims 4 to 7.

9. A powder comprising the aromatic polyether according to any one of claims 1 to 3 or the composition according to any one of claims 4 to 7.

10. A pellet comprising the aromatic polyether according to any one of claims 1 to 3 or the composition according to any one of claims 4 to 7.

11. The aromatic polyether according to any one of claims 1 to 3, the composition according to any one of claims 4 to 7, the film according to claim 8, the powder according to claim 9 or the pellet according to claim 10, for use in producing a composite material comprising an aromatic polyether and a continuous fiber.

12. Use of the aromatic polyether according to any one of claims 1 to 3, the composition according to any one of claims 4 to 7, the film according to claim 8, the powder according to claim 9 or the pellet according to claim 10 for producing a composite material comprising an aromatic polyether and a continuous fiber.

13. A method for producing a composite material, wherein the composite material is produced using the aromatic polyether according to any one of claim 1 to 3, the composition according to any one of claims 4 to 7, the film according to claim 8, the powder according to claim 9 or the pellet according to claim 10, and
a continuous fiber.

14. The method for producing the composite material according to claim 13, which comprises: compositing the aromatic polyether, the composition, the film, the powder or the pellet, and the continuous fiber.

15. The method for producing the composite material according to claim 13, which comprises: pressing the aromatic polyether, the composition, the film, the powder or the pellet, and the continuous fiber under heating.

16. A composite material produced using the aromatic polyether according to any one of claims 1 to 3, the composition according to any one of claims 4 to 7, the film according to claim 8, the powder according to claim 9 or the pellet according to claim 10, and
a continuous fiber.

17. A composite material comprising the aromatic polyether according to any one of claims 1 to 3 or the composition according to any one of claims 4 to 7, and
a continuous fiber.
